# EUROPEAN PATENT SPECIFICATION

(11) **EP 4 523 448 B1**
(45) Date of publication and mention of the grant of the patent: **10.12.2025**
(21) Application number: 23723222.8
(22) Date of filing: 02.05.2023
(51) Int. Cl.: H04W 24/08, H04W 24/10

(54) **CONTROLLING A COMMUNICATIONS NETWORK**
STEUERUNG EINES KOMMUNIKATIONSNETZWERKS
COMMANDE D'UN RÉSEAU DE COMMUNICATION

(30) Priority: 13.05.2022 FI 20225420
(43) Date of publication of application: 19.03.2025
(73) Proprietor: Elisa Oyj, 00520 Helsinki (FI)
(72) Inventor: ERTIMO, Riku, 00520 Helsinki (FI); HÖYKINPURO, Veijo, 00520 Helsinki (FI)
(74) Representative: Espatent Oy
(86) International application number: PCT/FI2023/050238
(87) International publication number: WO 2023/218122

(56) References cited:
- EP-A1- 2 133 712
- WO-A1-2021/016078
- US-A1- 2019 339 416
- US-A1- 2021 302 956

## Description

### TECHNICAL FIELD

The present disclosure generally relates to controlling a communications network.

### BACKGROUND

This section illustrates useful background information without admission of any technique described herein representative of the state of the art.

Cellular communications networks comprise a plurality of cells serving users of the network. There are various factors that affect operation of individual cells and co-operation between the cells. In order for the communications network to operate as intended and to provide planned quality of service, cells of the communications network need to operate as planned.

Performance data collected from the communications network can be used for evaluation of operation of the communications network and/or for optimizing operation of the communications network to improve operation of the communications network. For this purpose, there is a need to obtain accurate performance data. Prior art solutions are disclosed in WO2021/016078, US2019/339416, US2021/302956, and EP2133712.

Now, there are provided some new considerations on controlling a communications network and on how to use performance data from the communications networks for this purpose.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided a computer implemented method for controlling a communications network. The method is performed by
obtaining first meteorological data comprising information about weather conditions at different locations;
obtaining first performance data from the communications network at different network locations;
mapping the first meteorological data and the first performance data to each other based on location information to obtain a plurality of data points of performance data and respective weather condition;
creating a model of impact of the weather conditions on performance data based on the plurality of data points; and
providing the model for the purpose of clearing out effects of weather conditions from performance data for controlling the communications network.

In some embodiments, the method further comprises
obtaining second performance data from the communications network;
obtaining second meteorological data comprising information about weather conditions associated with the second performance data;
calculating further performance data based on the second performance data, the model and the second meteorological data; and
providing the further performance data for the purpose of controlling the communications network.

In some embodiments, controlling the communications network comprises evaluation of operation of the communications network based on performance data.

In some embodiments, controlling the communications network comprises optimizing operation of the communications network based on performance data.

In some embodiments, the model is cell specific.

In some embodiments, calculating the further performance data comprises calculating difference between values of the second performance data and performance data values obtained from the model based on the second meteorological data.

In some embodiments, calculating the further performance data further comprises calculating standard deviation of the difference for plurality of data points.

In some embodiments, calculating the further performance data comprises calculating standard deviation of the second performance data.

In some embodiments, the method further comprises
obtaining third meteorological data comprising a weather forecast;
obtaining forecasted performance data values from the model based on the third meteorological information;
providing the forecasted performance data values for the purpose of controlling the communications network.

In some embodiments, the model is created by fitting a curve on the obtained data points.

According to a second example aspect of the present invention, there is provided an apparatus comprising a processor and a memory including computer program code; the memory and the computer program code configured to, with the processor, cause the apparatus to perform the method of the first aspect or any related embodiment.

According to a third example aspect of the present invention, there is provided a computer program comprising computer executable program code which when executed by a processor causes an apparatus to perform the method of the first aspect or any related embodiment.

According to a fourth example aspect there is provided a computer program product comprising a non-transitory computer readable medium having the computer program of the third example aspect stored thereon.

According to a fifth example aspect there is provided an apparatus comprising means for performing the method of any preceding aspect.

Any foregoing memory medium may comprise a digital data storage such as a data disc or diskette; optical storage; magnetic storage; holographic storage; opto-magnetic storage; phase-change memory; resistive random-access memory; magnetic random-access memory; solid-electrolyte memory; ferroelectric random-access memory; organic memory; or polymer memory. The memory medium may be formed into a device without other substantial functions than storing memory or it may be formed as part of a device with other functions, including but not limited to a memory of a computer; a chip set; and a sub assembly of an electronic device.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 schematically shows a system according to an example embodiment;
Fig. 2 shows a block diagram of an apparatus according to an example embodiment; and
Fig. 3 shows flow charts according to example embodiments;
Figs. 4A-4B show graphs illustrating behaviour of some example performance data as a function of example weather conditions; and
Figs. 5-9 show graphs illustrating some example implementations.

### DETAILED DESCRIPTION

In the following description, like reference signs denote like elements or steps.

Various embodiments of present disclosure provide various solutions for controlling communications networks. The term communications network refers in general to cellular networks, mobile networks, wireless networks and the like. Various embodiments provide new mechanisms concerning how performance data obtainable form the communications network is used for controlling the communications network.

Weather conditions affect the behaviour of communications networks and may have significant effect on performance data of the communications network. That is, sometimes changes in performance data may be due to changes in weather conditions instead of problems or changes in operation of the network. For example, changes in temperature, wind conditions, rain, humidity etc. may affect the performance data. Various embodiments of present disclosure provide mechanisms for taking the weather conditions into account in performance data analysis. In this way, improved controlling of communications network may be achieved.

The weather conditions in the context of present disclosure may concern detected weather conditions or forecasted weather conditions. The weather conditions may include information about one or more of humidity, temperature, rain, snow, wind etc.

The following is a non-exclusive list of possible performance data types in the context of present disclosure: throughput, cell availability, handover failure or success rate, reference signal received power, RSRP, reference signal received quality, RSRQ, received signal strength indicator, RSSI, signal to noise ratio, SNR, signal to interference plus noise ratio, SINR, received signal code power, RSCP, and channel quality indicator, CQI. Other performance data may be used, too. Performance data may be referred to as Key Performance Indicators, KPI.

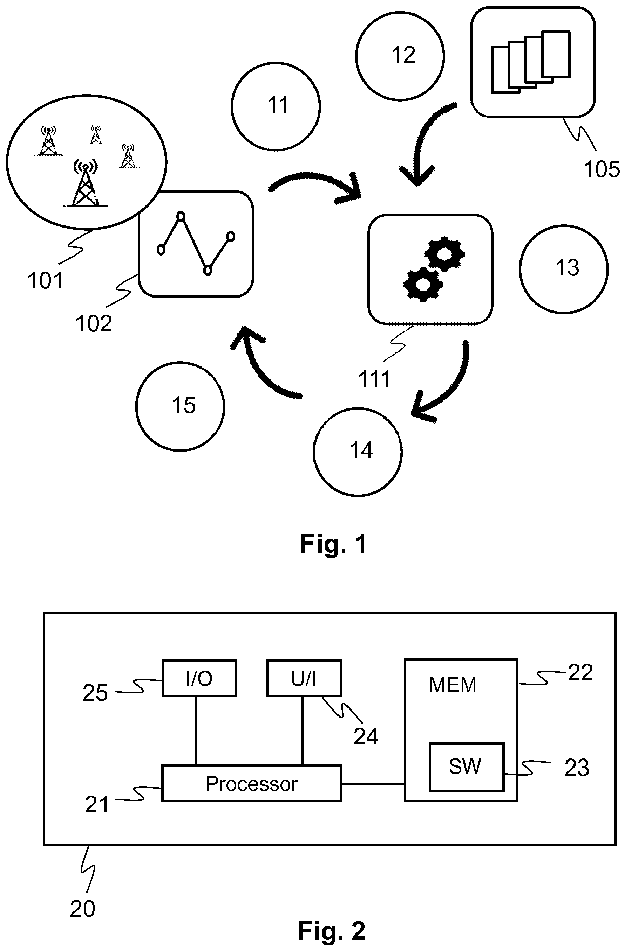

Fig. 1 schematically shows an example scenario according to an embodiment. The scenario shows a communications network 101 comprising a plurality of cells and base stations and other network devices, and an operations support system, OSS, 102 configured to manage operations of the communications network 101. Further, the scenario shows an automation system 111. The automation system 111 is configured to implement at least some example embodiments of present disclosure. The automation system 111 is operable to interact with the communications network 101 e.g. through the OSS 102 for example to receive data from the communications network 101 and to provide new settings to the communications network 101 through the OSS 102. Still further the scenario shows a source of meteorological data 105, which may be for example a weather service or a database.

In an example embodiment the scenario of Fig. 1 operates as follows: In phase 11, the automation system 111 receives performance data from the communications network 101 e.g. through the OSS 102.

In phase 12, the automation system 111 receives meteorological data from the source of meteorological data 105.

In phase 13, the automation system 111 analyzes the performance data and the meteorological data.

In phase 14, the results of the analysis are output for further processing. The further processing may be performed manually or automatically. The results of the analysis may be shown on a display, a dashboard, as trouble tickets, or otherwise output to a user or stored in a suitable storage for later use.

This output may then be used for manually or automatically controlling the communications network 101. The controlling may involve evaluation of operation of the communications network 101. Additionally or alternatively, the controlling may involve optimizing operation of the communications network e.g. by adjusting parameters or settings, repairing or changing components, rolling out new functionalities or new components, restarting devices etc. in phase 15 to improve operation of the communications network. In this way, the controlling may involve identifying and optionally also solving problems that may exist in the communications network.

The automatic controlling of the communications network 101 may be performed in the automation system 111 or in some other logically or physically separate entity.

The analysis performed in the automation system 111 may be automatically or manually triggered. The analysis may be periodically repeated (e.g. once a day, every 1-14 days, once a week, every two weeks, once a month).

Fig. 2 shows a block diagram of an apparatus 20 according to an embodiment. The apparatus 20 is for example a general purpose computer, cloud computing environment or some other electronic data processing apparatus. The apparatus 20 can be used for implementing at least some embodiments of the invention. That is, with suitable configuration the apparatus 20 is suited for operating for example as the automation system 111 of Fig. 1.

The apparatus 20 comprises a communication interface 25; a processor21; a user interface 24; and a memory 22. The apparatus 20 further comprises software 23 stored in the memory 22 and operable to be loaded into and executed in the processor 21. The software 23 may comprise one or more software modules and can be in the form of a computer program product.

The processor 21 may comprise a central processing unit (CPU), a microprocessor, a digital signal processor (DSP), a graphics processing unit, or the like. Fig. 2 shows one processor 21, but the apparatus 20 may comprise a plurality of processors.

The user interface 24 is configured for providing interaction with a user of the apparatus. Additionally or alternatively, the user interaction may be implemented through the communication interface 25. The user interface 24 may comprise a circuitry for receiving input from a user of the apparatus 20, e.g., via a keyboard, graphical user interface shown on the display of the apparatus 20, speech recognition circuitry, or an accessory device, such as a headset, and for providing output to the user via, e.g., a graphical user interface or a loudspeaker.

The memory 22 may comprise for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 20 may comprise a plurality of memories. The memory 22 may serve the sole purpose of storing data, or be constructed as a part of an apparatus 20 serving other purposes, such as processing data.

The communication interface 25 may comprise communication modules that implement data transmission to and from the apparatus 20. The communication modules may comprise a wireless or a wired interface module(s) or both. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as Ethernet or universal serial bus (USB), for example. The communication interface 25 may support one or more different communication technologies. The apparatus 20 may additionally or alternatively comprise more than one of the communication interfaces 25.

A skilled person appreciates that in addition to the elements shown in Fig. 2, the apparatus 20 may comprise other elements, such as displays, as well as additional circuitry such as memory chips, application-specific integrated circuits (ASIC), other processing circuitry for specific purposes and the like.

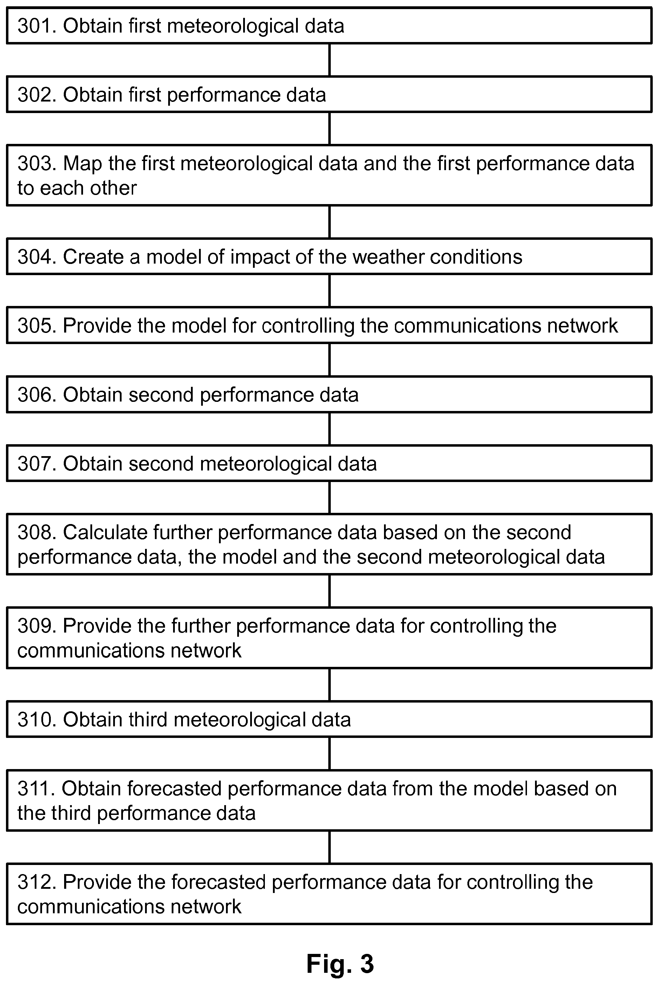

Fig. 3 shows a flow chart according to example embodiments. The illustrated processes comprise various possible steps including some optional steps while also further steps can be included and/or some of the steps can be performed more than once. The processes may be implemented in the automation system 111 of Fig. 1 and/or in the apparatus 20 of Fig. 2. The processes are implemented in a computer program code and do not require human interaction unless otherwise expressly stated. It is to be noted that the processes may however provide output that may be further processed by humans and/or the processes may require user input to start.

The process of Fig. 3 comprises the following steps:
First, a model of impact of weather conditions is created and then the model is used.

301: First meteorological data is obtained. The first meteorological data comprises information about weather conditions at different locations.

302: First performance data is obtained. The first performance data is obtained from the communications network and the first performance data may include data from different network locations.

The first meteorological data and the first performance data cover substantially the same time period. There may be slight variation in the time periods that are covered, though. The length of the time period may be e.g. weeks or months.

303: The first meteorological data and the first performance data are mapped to each other based on location information. As a result, there are a plurality of data points of performance data and respective weather condition.

It is to be noted that the location information related to the meteorological data and the location information related to the performance data need not be exactly the same. For example, nearest meteorological data location may be chosen for each network location.

At minimum the meteorological data is obtained for one location and the performance data is obtained for one cell of the communications network. However, it may be more efficient to obtain larger amount of data at a time.

304: A model of impact of the weather conditions is created. The model characterizes the impact of the weather conditions on performance data. The model is created based on the plurality of data points from the step 303.

In an embodiment, the model is cell specific. That is, own model is created for each cell. In this way, the models may take into account individual characteristics of the cells.

The model may be created by fitting a curve on the obtained data points. Examples of creating the model are discussed in detail later in this document.

305: The model is provided for the purpose of controlling the communications network. That is, the model is created and provided for later use.

Herein, the controlling of the communications network may comprise evaluation of operation of the communications network and/or optimizing operation of the communications network.

In an embodiment, the steps 301-305 may be repeated to update the model.

The steps 306-312 of Fig. 3 concern using the model. The steps 306-309 of Fig. 3 concern embodiments related to adjusting performance data or to generating further performance data. The steps 310-312 of Fig. 3 concern embodiments related to weather forecasts.

306: Second performance data is obtained. In general, the second performance data is for example later collected performance data compared to the first performance data.

307: Second meteorological data is obtained. The second meteorological data comprises information about weather conditions associated with the second performance data.

The second meteorological data and the second performance data cover substantially the same time period. There may be slight variation in the time periods that are covered, though. The length of the time period may be e.g. hours, days or weeks.

308: Further performance data is calculated based on the second performance data, the model of impact of the weather conditions and the second meteorological data.

The further performance data may be based on difference between the second performance data and performance data obtained from the model. If there are differences between the second performance data and performance data obtained from the model, there may be e.g. some problem in the network that needs to be taken care of. Additionally or alternatively, the difference between the second performance data and performance data obtained from the model may indicate whether some improvement attempt that was performed in the network actually improved the operation of the network or not.

Additionally or alternatively, the further performance data may be based on standard deviation of the second performance data and/or standard deviation of the difference between the second performance data and performance data obtained from the model. The standard deviation may be seen as an indicator of the (e.g. hourly or daily) variation in the performance data. The variation may be partly due to the weather conditions and partly due to other factors, such as e.g. problems in the network or changes in the network. The variation due to the other factors is in general the one that is of interest.

Some detailed example cases of the further performance data are discussed later in this document.

309: The further performance data is provided for the purpose of controlling the communications network.

The further performance data obtained by the use of the model of impact of the weather conditions provides that it can be identified which part of changes or variation in the performance data is caused by changes in weather conditions. This enables that the controlling of communications network may be based on more accurate performance data. In this way it may be possible to reduce misinterpretation of the performance data by clearing out performance data changes caused by changes in weather conditions. This further allows more accurate targeting of corrective or optimization actions in the communications network.

310: Third meteorological data is obtained. The third meteorological data comprises a weather forecast. The forecast may be e.g. for the next day(s) or for the next week.

311: Forecasted performance data values are obtained from the model based on the third meteorological information.

312: The forecasted performance data values are provided for the purpose of controlling the communications network.

The forecasted performance data values may then be compared to later measured performance data in order to analyse the later measured performance data. If there are differences between the forecasted performance data values and the later measured performance data, there may be e.g. some problem in the network that needs to be taken care of. Additionally or alternatively, the difference between the forecasted performance data values and the later measured performance data may indicate whether some improvement attempt that was performed in the network actually improved operation of the network or not.

Still further, the forecasted performance data may be used for generating advance warnings for network operators. For example, if a snowstorm is forecasted, the forecasted performance data may show substantially degraded performance data values. The degraded performance data values may trigger an alarm based on which personnel of the network operator can prepare for increased number of problems in network performance and possibly increased number of customer complaints. Possibly even the customers could be warned beforehand.

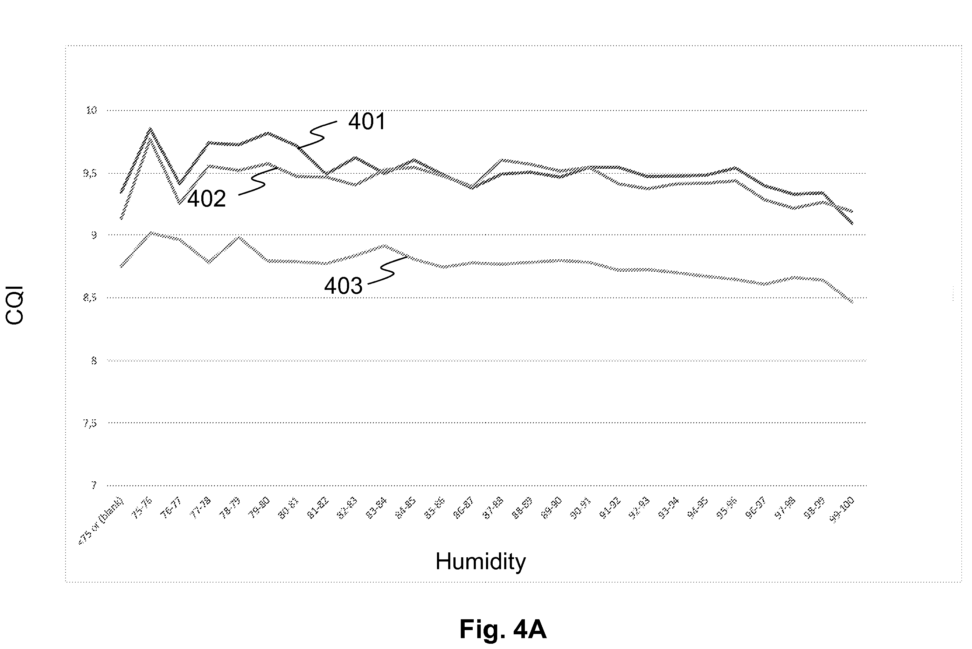

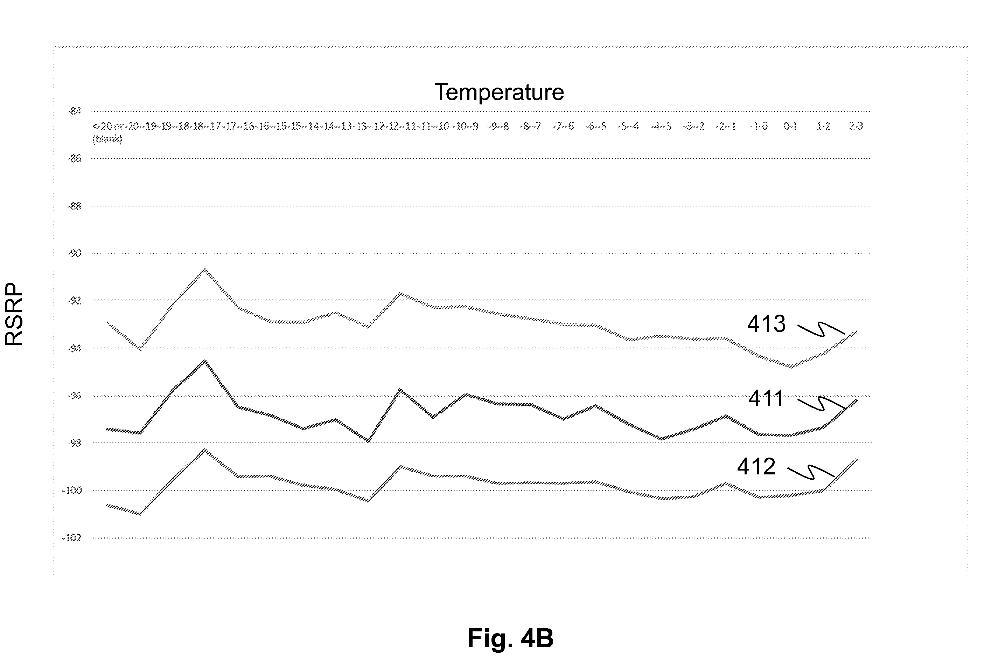

Figs. 4A-4B show graphs illustrating behaviour of some example performance data as a function of example weather conditions. The graphs illustrate average values over an example network. Fig. 4A shows how CQI changes as a function of humidity in three examples. Three curves 401, 402, and 403 show CQI for different operating frequencies. Fig. 4B shows how RSRP changes as a function of temperature in three examples. Three curves 411, 412, and 413 show RSRP for different operating frequencies. It can be seen from the curves that humidity and temperature may have a significant effect on the performance data (CQI and RSRP in these examples).

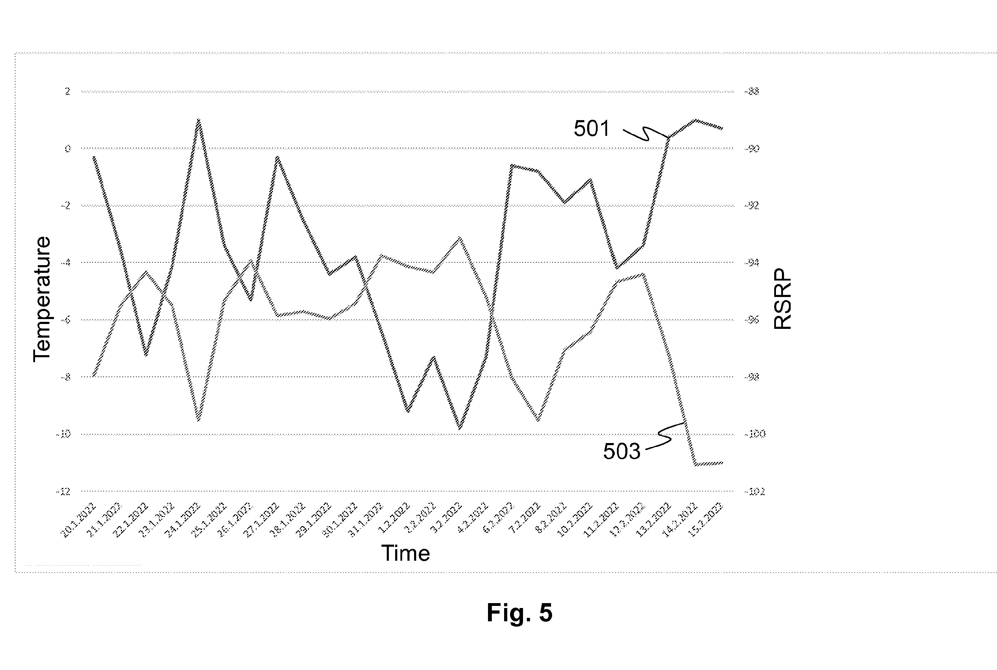

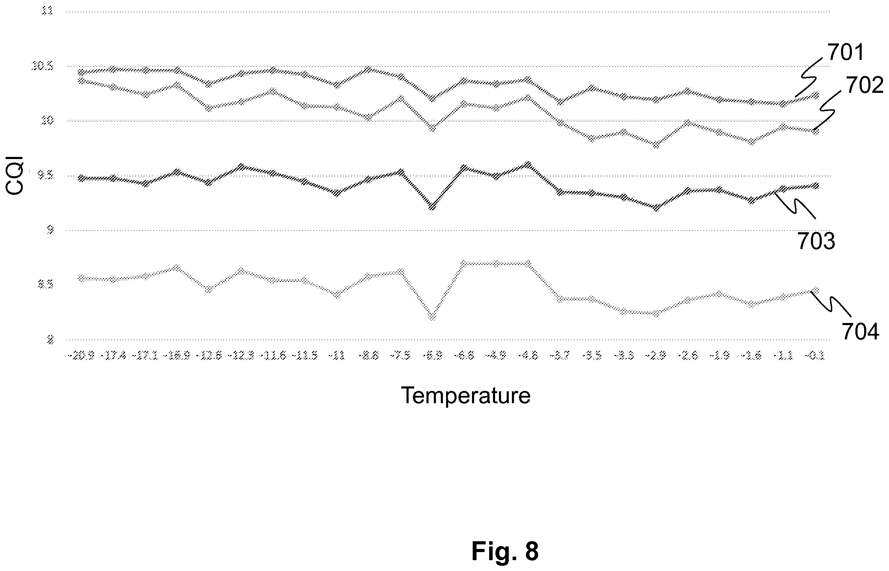

Figs. 5-9 show graphs illustrating some example implementations. An example case of Figs. 5-7 concerns RSRP in one example cell. An example case of Figs. 8-9 concerns CQI that can be used for example for evaluating whether antenna tilting improved operation of the network or not.

Fig. 5 shows daily average temperature 501 for the cell and daily average RSRP 503 for the cell. It can be seen that there is variation in both.

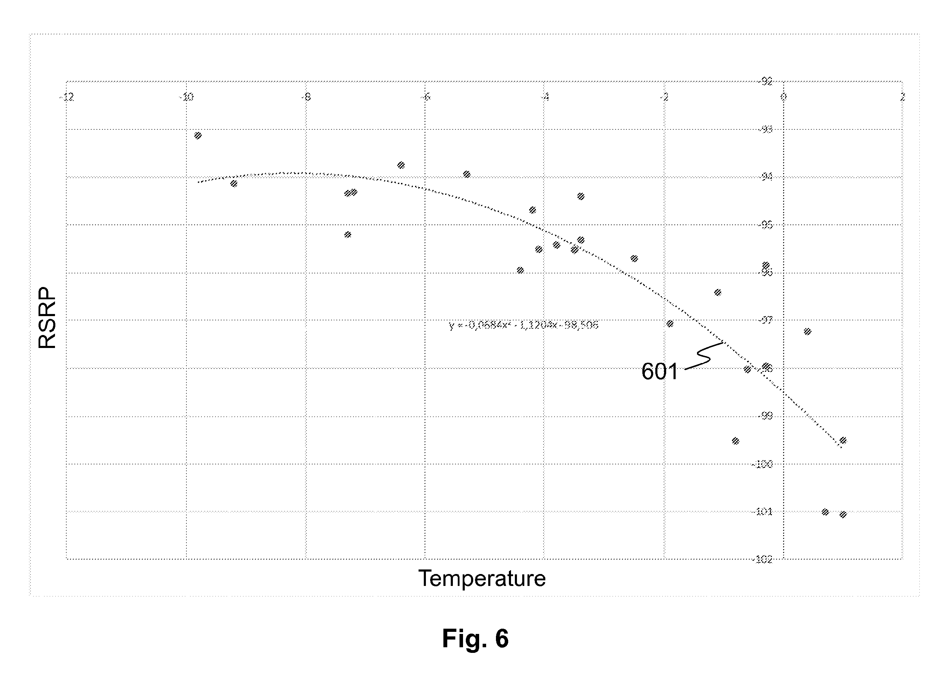

Fig. 6 shows a scatter diagram of measurement data points. Each point represents a temperature-RSRP pair for the cell. The model of impact of the weather conditions for this cell is created by fitting a curve 601 on these data points. The model may be for example a 2^{nd} order polynomic fitted to the measurement points. The curve 601 (i.e. the model) gives RSRP as a function of temperature.

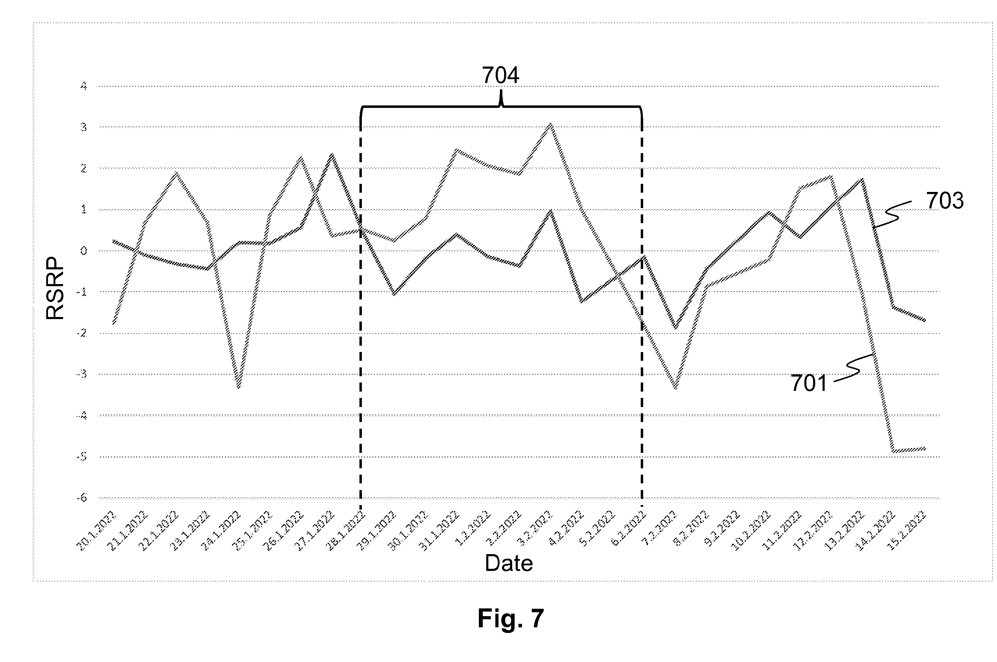

Fig. 7 shows two curves of RSRP difference, a first curve 701 and a second curve 703. The first curve 701 shows difference between daily average RSRP and average RSRP over the measurement period. As a further option, standard deviation of this curve may be calculated. Standard deviation of the first curve 701 gives value 2,22 in this example. This is the total variation in the RSRP values and includes variation due to changes in weather and variation due to other factors. The variation due to the other factors is in general the one that is of interest.

The second curve 703 shows difference between the daily average RSRP and RSRP obtained from the model (e.g. curve 601 of Fig. 6) for the temperature of the respective day. This difference can be interpreted to represent changes in RSRP due to the other factors than changes in weather. That is, this difference can be interpreted to provide performance data wherein the effects of weather conditions have been cleared out. Standard deviation may be calculated also for this curve. Standard deviation of the second curve 703 gives value 0,99 in this example. This can be interpreted to be the variation due to the other factors than changes in weather. That is, this standard deviation value may indicate problems in network or confirm desired improvement for example.

The difference between the standard deviation of the first curve 701 and the standard deviation of the second curve 703 can be interpreted to represent the changes due to the weather conditions. This difference gives value 1,23 in this example. The standard deviation values may be used for evaluating difference between measurement results without weather compensation (the first curve 701) and measurement results with weather compensation (the second curve 703). In this way, it is possible to evaluate how well the weather compensation works. Some other means may be used for this purpose, too.

It can be seen in Fig. 7 that the second curve 703 (i.e. the difference between the daily average RSRP and RSRP obtained from the model) is close to 0 during time period 704. This means that there is no significant change in RSRP during this time period when the effects of weather have been removed. It would not have been very easy to see such situation based on the first curve 701 (i.e. the difference between daily average RSRP and average RSRP over the measurement period).

Fig. 8 shows four examples of daily average CQI 701-704 as a function of temperature. The examples are for different frequency cells.

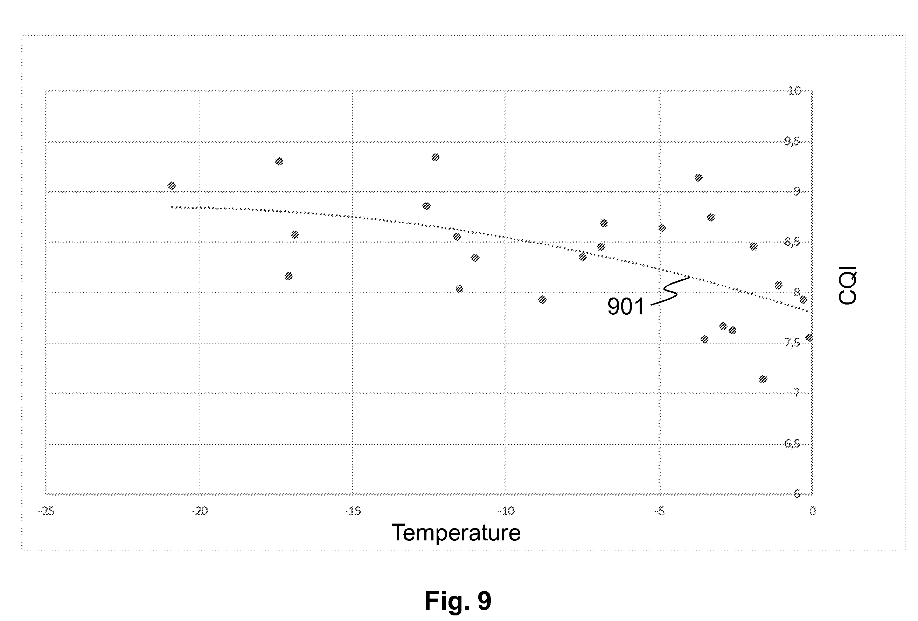

Fig. 9 shows a scatter diagram of the data points of temperature and CQI pairs for one of the cells of Fig. 8. The model of impact of the weather conditions for this cell is created by fitting a curve 901 on these data points. The curve 901 gives CQI as a function of temperature.

The model of Fig. 9 may be used in analysis of CQI measurements the same way as discussed in connection with Fig. 7 for the RSRP example.

Without in any way limiting the scope, interpretation, or application of the appended claims, a technical effect of one or more of the example embodiments disclosed herein improved accuracy of performance data that is used for controlling of communications network. With various embodiments of present disclosure, it is possible to obtain performance data wherein the effects of weather conditions have been cleared out. By using such performance data, identification of problems in performance of the communications network may be improved as changes in such performance data are caused by other factors than the weather. Additionally or alternatively, it may be possible to extract performance data component that is caused by changes in weather conditions. This may provide further possibilities to obtain better understanding of the operation of the communications network.

By having more accurate performance data, identification of problems in performance of the communications network may be improved and thereby improved controlling of communications network may be provided.

Any of the afore described methods, method steps, or combinations thereof, may be controlled or performed using hardware; software; firmware; or any combination thereof. The software and/or hardware may be local; distributed; centralised; virtualised; or any combination thereof. Moreover, any form of computing, including computational intelligence, may be used for controlling or performing any of the afore described methods, method steps, or combinations thereof. Computational intelligence may refer to, for example, any of artificial intelligence; neural networks; fuzzy logics; machine learning; genetic algorithms; evolutionary computation; or any combination thereof.

Various embodiments have been presented. It should be appreciated that in this document, words comprise; include; and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A computer implemented method for controlling a communications network, the method comprising
obtaining (301) first meteorological data comprising information about weather conditions at different locations;
obtaining (302) first performance data from the communications network at different network locations; **characterized by**
mapping (303) the first meteorological data and the first performance data to each other based on location information to obtain a plurality of data points of performance data and respective weather condition;
creating (304) a model of impact of the weather conditions on performance data based on the plurality of data points; and
providing (305) the model for the purpose of clearing out effects of weather conditions from performance data for controlling the communications network.

2. The method of claim 1, wherein the method further comprises
obtaining (306) second performance data from the communications network;
obtaining (307) second meteorological data comprising information about weather conditions associated with the second performance data;
calculating (308) further performance data based on the second performance data, the model and the second meteorological data; and
providing (309) the further performance data for the purpose of controlling the communications network.

3. The method of claim 2, wherein calculating the further performance data comprises calculating difference between values of the second performance data and performance data values obtained from the model based on the second meteorological data.

4. The method of claim 3, wherein calculating the further performance data further comprises calculating standard deviation of the difference for plurality of data points.

5. The method of claim 2, wherein calculating the further performance data comprises calculating standard deviation of the second performance data.

6. The method of any preceding claim, wherein controlling the communications network comprises evaluation of operation of the communications network based on performance data.

7. The method of any preceding claim, wherein controlling the communications network comprises optimizing operation of the communications network based on performance data.

8. The method of any preceding claim, wherein the model is cell specific.

9. The method of any preceding claim, further comprising
obtaining (310) third meteorological data comprising a weather forecast;
obtaining (311) forecasted performance data values from the model based on the third meteorological information;
providing (312) the forecasted performance data values for the purpose of controlling the communications network.

10. The method of any preceding claim, wherein the model is created by fitting a curve on the obtained data points.

11. An apparatus (20, 111) comprising means for performing the method of any one of claims 1-10.

12. The apparatus (20, 111) of claim 11, wherein the means comprise a processor and a memory including computer program code, and wherein the memory and the computer program code are configured to, with the processor, cause the performance of the apparatus.

13. A computer program comprising computer executable program code (23) for causing an apparatus to perform the method of any one of claims 1-10.

## Patentansprüche

1. Computer-implementiertes Verfahren zur Steuerung eines Kommunikationsnetzes, wobei das Verfahren umfasst:
Beziehen (301) von ersten meteorologischen Daten, die Informationen über Wetterbedingungen an unterschiedlichen Standorten umfassen;
Beziehen (302) von ersten Leistungsdaten aus dem Kommunikationsnetz an unterschiedlichen Netzstandorten; **gekennzeichnet durch**
gegenseitiges Zuordnen (303) der ersten meteorologischen Daten und der ersten Leistungsdaten auf Grundlage von Standortinformationen, um eine Mehrzahl von Datenpunkten von Leistungsdaten und entsprechenden Wetterbedingungen zu erhalten;
Erstellen (304) eines Modells über die Auswirkung der Wetterbedingungen auf die Leistungsdaten basierend auf die Mehrzahl von Datenpunkten; und
Bereitstellen (305) des Modells zum Zwecke der Beseitigung der Wirkungen der Wetterbedingungen aus den Leistungsdaten, um das Kommunikationsnetz zu steuern.

2. Verfahren nach Anspruch 1, wobei das Verfahren ferner umfasst:
Beziehen (306) von zweiten Leistungsdaten aus dem Kommunikationsnetz;
Beziehen (307) von zweiten meteorologischen Daten, die Informationen über mit den zweiten Leistungsdaten verknüpfte Wetterbedingungen umfassen;
Berechnen (308) von weiteren Leistungsdaten auf Grundlage der zweiten Leistungsdaten, des Modells und der zweiten meteorologischen Daten; und
Bereitstellen (309) der weiteren Leistungsdaten zum Zwecke der Steuerung des Kommunikationsnetzes.

3. Verfahren nach Anspruch 2, wobei das Berechnen der weiteren Leistungsdaten umfasst: Berechnen einer Differenz zwischen den Werten der zweiten Leistungsdaten und den aus dem Modell bezogenen Leistungsdatenwerten auf Grundlage der zweiten meteorologischen Daten.

4. Verfahren nach Anspruch 3, wobei das Berechnen der weiteren Leistungsdaten ferner umfasst: Berechnen der Standardabweichung der Differenz für eine Mehrzahl von Datenpunkten.

5. Verfahren nach Anspruch 2, wobei das Berechnen der weiteren Leistungsdaten umfasst: Berechnen der Standardabweichung der zweiten Leistungsdaten.

6. Verfahren nach einem vorhergehenden Anspruch, wobei die Steuerung des Kommunikationsnetzes umfasst: Auswerten des Betriebs des Kommunikationsnetzes auf der Grundlage von Leistungsdaten.

7. Verfahren nach einem vorhergehenden Anspruch, wobei die Steuerung des Kommunikationsnetzes umfasst: Optimieren des Betriebs des Kommunikationsnetzes auf der Grundlage von Leistungsdaten.

8. Verfahren nach einem vorhergehenden Anspruch, wobei das Modell zellenspezifisch ist.

9. Verfahren nach einem vorhergehenden Anspruch, ferner umfassend:
Beziehen (310) von dritten meteorologischen Daten, die eine Wettervorhersage umfassen;
Beziehen (311) von vorhergesagten Leistungsdatenwerten aus dem Modell auf der Grundlage der dritten meteorologischen Informationen;
Bereitstellen (312) der vorhergesagten Leistungsdatenwerte zum Zwecke der Steuerung des Kommunikationsnetzes.

10. Verfahren nach einem vorhergehenden Anspruch, wobei das Modell durch Anpassung einer Kurve an die erhaltenen Datenpunkte erstellt wird.

11. Vorrichtung (20, 111), die Mittel zur Ausführung des Verfahrens nach einem der Ansprüche 1 bis 10 umfasst.

12. Vorrichtung (20, 111) nach Anspruch 11, wobei die Mittel einen Prozessor und einen Speicher, der einen Computerprogrammcode enthält, umfassen, und wobei der Speicher und der Computerprogrammcode dazu ausgelegt sind, mit dem Prozessor die Ausführung der Vorrichtung zu bewirken.

13. Computerprogramm, das einen computerausführbaren Programmcode (23) umfasst, um eine Vorrichtung zum Ausführen des Verfahrens nach einem der Ansprüche 1 bis 10 zu veranlassen.

## Revendications

1. Procédé mis en œuvre par ordinateur pour la commande d'un réseau de communication, ledit procédé comprenant les étapes consistant à :
obtenir (301) de premières données météorologiques comprenant des informations sur les conditions atmosphériques à différents endroits;
obtenir (302) de premières données de performance du réseau de communication à différents endroits du réseau; **caractérisé par** les étapes consistant à :
mettre en correspondance (303) les premières données météorologiques et les premières données de performance sur la base des informations relatives aux endroits afin d'obtenir une pluralité de points de données avec des données de performance et des conditions atmosphériques respectives;
créer (304) un modèle de l'impact des conditions atmosphériques sur les données de performance sur la base de ladite pluralité de points de données; et
fournir (305) le modèle afin d'éliminer les effets des conditions atmosphériques des données de performance pour la commande du réseau de communication.

2. Procédé selon la revendication 1, dans lequel le procédé comprend également les étapes consistant à :
obtenir (306) de deuxième données de performance du réseau de communication;
obtenir (307) de deuxièmes données météorologiques comprenant des informations sur des conditions atmosphériques associées aux deuxièmes données de performance;
calculer (308) d'autres données de performance sur la base des deuxièmes données de performance, du modèle et des deuxièmes données météorologiques; et
fournir (309) les autres données de performance aux fins de la commande du réseau de communication.

3. Procédé selon la revendication 2, dans lequel le calcul des autres données de performance comprend l'étape consistant à calculer la différence entre les valeurs des deuxièmes données de performance et les valeurs des données de performance obtenues à partir du modèle sur la base des deuxièmes données météorologiques.

4. Procédé selon la revendication 3, dans lequel le calcul des autres données de performance comprend également l'étape consistant à calculer l'écart-type de la différence pour une pluralité de points de données.

5. Procédé selon la revendication 2, dans lequel le calcul des autres données de performance comprend l'étape consistant à calculer l'écart-type des deuxièmes données de performance.

6. Procédé selon une revendication précédente quelconque, dans lequel la commande du réseau de communication comprend l'étape consistant à évaluer le fonctionnement du réseau de communication sur la base des données de performance.

7. Procédé selon une revendication précédente quelconque, dans lequel la commande du réseau de communication comprend l'étape consistant à optimiser le fonctionnement du réseau de communication sur la base des données de performance.

8. Procédé selon une revendication précédente quelconque, dans lequel le modèle est spécifique à la cellule.

9. Procédé selon une revendication précédente quelconque, comprenant également les étapes consistant à :
obtenir (310) de troisièmes données météorologiques comprenant une prévision météorologique;
obtenir (311) des valeurs prévisionnelles des données de performance à partir du modèle sur la base des troisièmes informations météorologiques;
fournir (312) les valeurs prévisionnelles des données de performance aux fins de la commande du réseau de communication.

10. Procédé selon une revendication précédente quelconque, dans lequel le modèle est créé par l'ajustement d'une courbe sur les points de données obtenus.

11. Appareil (20, 111) comprenant des moyens pour la réalisation du procédé selon l'une des revendications 1 à 10.

12. Appareil (20, 111) selon la revendication 11, dans lequel les moyens comprennent un processeur et une mémoire comportant un code de programme informatique, et dans lequel la mémoire et le code de programme informatique sont configurés pour assurer, avec le processeur, le fonctionnement de l'appareil.

13. Programme informatique comprenant un code de programme (23) pouvant être exécutées par un ordinateur pour amener un appareil à effectuer le procédé selon l'une des revendications 1 à 10.
